# EUROPÄISCHE PATENTSCHRIFT

(11) **EP 1 633 986 B1**
(45) Veröffentlichungstag und Bekanntmachung des Hinweises auf die Patenterteilung: **17.10.2007**
(21) Anmeldenummer: 04735446.9
(22) Anmeldetag: 29.05.2004
(51) Int. Cl.: F15B 11/13

(54) **HYDRAULISCHE SCHALTUNG**
HYDRAULIC CIRCUIT
CIRCUIT HYDRAULIQUE

(30) Priorität: 17.06.2003 DE 10327519
(43) Veröffentlichungstag der Anmeldung: 15.03.2006
(73) Patentinhaber: Ortlinghaus-Werke GmbH, 42929 Wermelskirchen (DE)
(72) Erfinder: KUTTRUF, Werner, 42329 Wuppertal (DE); SEEGER, Herbert, 32547 Bad Oeynhausen (DE)
(74) Vertreter: Füssel, Michael
(86) Internationale Anmeldenummer: PCT/EP2004/005858
(87) Internationale Veröffentlichungsnummer: WO 2004/111466

(56) Entgegenhaltungen:
- DE-A- 1 533 776
- DE-B- 1 053 255
- NL-C- 137 877
- US-A- 3 415 161

## Beschreibung

Die Erfindung betrifft ein System aus Kupplung und Bremse und eine hydraulische Schaltung zu dessen Ansteuerung.

Eine derartige hydraulische Schaltung ist bekannt (s. z.B. www.ortlinghaus.de).

Aus der DE 10 53 255 B ist darüber hinaus eine hydraulische Schaltung mit Hochdruck- und Niederdruckstufe für ein System aus Kupplung und Bremse bekannt, bei welchem zum Losbrechen einer im unteren Totpunkt befindlichen Presse die Hochdruckstufe an Stelle der Niederdruckstufe schaltbar ist.

Ferner zeigt die NL 137 877 C eine hydraulische Schaltung für ein Flugzeug, bei welchem ein passiver Dosierzylinder parallel zu einem Wegeventil an eine Kolbenzylindereinheit angeschlossen ist.

Bekannte derartige Systeme aus Kupplung und Bremse weisen entweder einzelne Kupplungen und einzelne Bremsen auf oder sind als Kupplungs-Brems-Kombinationen bekannt. Deshalb werden, da die Erfindung auf beide Ausführungsformen anwendbar ist, mit den im folgenden aufgeführten Kupplungs-Brems-Kombinationen stets auch alle gleichwirkenden Systeme aus Kupplung und Bremse umfaßt.

Derartige hydraulische Schaltungen dienen dazu, mechanische Pressen, die beispielsweise zur Herstellung von Karosserieteilen verwendet werden, entweder mit einem Antrieb zu verbinden oder mit einer Bremse im Stillstand zu halten.

Da hierbei tonnenschwere Massen zu beschleunigen bzw. abzubremsen sind, fordern die geltenden Sicherheitsstandards, daß bei Einergieausfall nach Möglichkeit im Bereich weniger hundertstel Sekunden die Bremsfunktion zum Stillstand geführt haben muß, während andererseits bei erneuter Aufnahme des Pressenbetriebs auch entsprechend schnelle Einrückzeiten für die Kupplung zu realisieren sind.

Diese Forderung ist mit dem Transfer der Werkstücke in die Presse hinein zu sehen, so daß man sehr kurze Anhaltezeiten bzw. Beschleunigungszeiten anstrebt.

Dabei können diese Zeiten allerdings nicht beliebig kurz werden, da dann sehr hohe Beschleunigungen an Kupplung und Bremse und in Folge im gesamten Antriebsstrang der Maschine auftreten können, so daß der Antrieb einer unzulässig hohen Belastung ausgesetzt werden würde.

Trotzdem ist es Aufgabe der vorliegenden Erfindung, die Beschleunigungs- und Anhaltezeit derartiger Pressen so zu verkürzen, daß eine erhöhte Belastung auf den Antrieb unterbleibt.

Diese Aufgabe löst die Erfindung mit den Merkmalen des Hauptanspruchs.

Aus der Erfindung ergibt sich der Vorteil, daß die Beschleunigungs- bzw. Bremszeiten an der Kupplung bzw. der Bremse im Sinne einer beherrschbaren Belastung des Antriebs ausgelegt werden können, während zugleich die sogenannte Verzögerungszeit, die zum Umschalten der Kupplungs-Brems-Kombination von der Kupplungs- in die Bremsstellung und umgekehrt benötigt wird, verkürzt wird.

Durch die Erfindung wird daher lediglich die Kupplungs-Brems-Kombination zwischen der Kupplungs- und der Bremsstellung schneller verfahren, während zugleich die Zeiten zum Aufbau des Kupplungs- bzw. Bremsmoments von der erhöhten Verfahrgeschwindigkeit unbehelligt bleiben.

Dieser Vorteil wird dadurch erreicht, daß das für den Verfahrweg der Kupplungs-Brems-Kombination notwenige Volumen an Hydrauliköl über eine Dosierkolbeneinheit bestimmt wird, die sowohl für die Verlagerung der Kupplungs-Brems-Kombination in die Kupplungsstellung als auch für die Verlagerung in die Bremsstellung aktiv wird. Dies wird dadurch erzielt, daß die Dosierkolbeneinheit über eine bidirektional durchströmbare Hydraulikverbindung mit der Kupplungs-Brems-Kombination verbunden ist. Auf diese Weise lässt sich die jeweils erforderliche Menge an Dosiervolumen, die zur Verlagerung der Kupplungs-Brems-Kombination innerhalb der Verzögerungszeit notwendig ist, für beide Verlagerungsrichtungen ausnutzen, so daß anschließend über ein herkömmliches Pressensicherheitsventil der Drehmomentaufbau an Kupplung bzw. Bremse erfolgen kann.

Der Grundgedanke der Erfindung beruht daher darauf, die Totzeit zur Verlagerung der Kupplungs-Brems-Kombination von der Kupplungs- in die Bremsstellung und umgekehrt zu verringern und anschließend über ein herkömmliches Pressensicherheitsventil die Reibpartner in den erforderlichen kraftschlüssigen Eingriff zu verbringen.

Berücksichtigt man dabei, daß bei derartigen hydraulischen Schaltungen aus Sicherheitsgründen die Bremse stets unter mechanischer Federbelastung steht, so daß sie auch bei Ausfall des hydraulischen Drucks die mechanische Presse sicher zum Stillstand bringt, erfolgt die Zurückdosierung des Dosiervolumens bei der Verlagerung der Kolben-Zylindereinheit von der Kupplungsstellung in die Bremsstellung passiv, während sie in der umgekehrten Richtung von der Dosierkolbeneinheit aktiv ausgetragen wird, so daß die erforderliche Befüllung der Kolben-Zylindereinheit hochgenau und im Bereich weniger Millisekunden ermöglicht ist.

Eine Weiterbildung der Erfindung sieht vor, die bidirektional durchströmbare Hydraulikleitung zum Befüllen und Entlasten der Kolben-Zylindereinheit mit einer im Verhältnis zur Abgangsleitung des Pressensicherheitsventils größeren Nennweite zu versehen, damit möglichst geringe Strömungswiderstände während der Verlagerung der Kupplungs-Brems-Kombination zwischen den beiden Endstellungen entstehen.

Auch diese Maßnahme fördert daher eine Verringerung der Verzögerungszeit ohne Einfluß auf die Beschleunigungswerte des Antriebs.

Ein weiterer Vorteil der Erfindung ergibt sich daraus, daß hohe Druckspitzen ausgeschlossen sind, da mit der Hin- und Herverlagerung des Dosiervolumens zwischen der Dosierkolbeneinheit und der Kolben-Zylindereinheit keine Druckspitzen einher gehen.

Bei der bidirektional durchströmbaren Hydraulikverbindung handelt es sich daher um eine Hydraulikleitung, die bei Verlagerung der Kupplungs-Brems-Kombination in die Kupplungsstellung in der einen und bei Verlagerung in die Bremsstel lung in der anderen Richtung durchströmt wird, wobei stets das für die Verlagerung notwendige Dosiervolumen hin- oder herströmt.

Aus diesem Grunde ist es zweckmäßig, die bidirektionale Hydraulikverbindung möglichst frei von Engstellen, Bögen oder dgl. als geradlinige Verbindung auszugestalten.

Dabei läßt die Dosierkolbeneinheit eine Bemessung des Dosiervolumens mit einer derartigen Genauigkeit zu, daß mit Erreichen des jeweiligen Dosiervolumens gerade eben noch kein Drehmomentaufbau an der Kupplung bzw. Bremse erfolgt.

Damit werden Belastungsspitzen auf den Antrieb zuverlässig vermieden, da ein kurzfristig eintretender Reibschlußkontakt zwischen den Reibpartnern an Kupplung und Bremse unterbleibt.

Die Kupplungsbewegung vom Ende des zugeführten Dosiervolumens bis zum vollständigen Reibschluß wird über ein herkömmliches Pressensicherheitsventil vorgenommen.

Die Bremsverbindung vom Ende des zurückgeströmten Dosiervolumens bis zum vollständigen Reibschluß erfolgt in herkömmlicher Weise über die Druckfedern, gegebenenfalls kann aber auch - wie bei der Kupplung - eine Aktiv-Steuerung vorgesehen sein.

Zweckmäßigerweise wird das Dosiervolumen innerhalb eines Verlagerungsweges an der Dosiereinheit bestimmt, der nicht durch mechanische Endanschläge bestimmt ist. Diese Maßnahme bietet den Vorteil, daß jeglicher mechanischer Verschleiß an der Dosierkolbeneinheit unterbleibt. In den Endbereichen des Dosierhubes wird auf diese Weise eine klar definierte Beschleunigung bzw. Verzögerung erzielt.

Um das Dosiervolumen an das Zylindervolumen verschiedener Baugrößen von Kupplungs-Brems-Kombinationen leicht anpassen zu können, kann der begrenzte Hub der Dosierkolbeneinheit von außen einstellbar sein.

Dies kann über eine manuell zu betätigende Stellsspindel oder einen elektronisch ansteuerbaren Motor erfolgen.

In einem bevorzugten Ausführungsbeispiel ist die Dosierkolbeneinheit mit einem Hauptsteuerkreis versehen, der unmittelbar mit der Pumpenleitung verbunden ist, während parallel zum Hauptsteuerkreis eine hydraulische Vorsteuerung vorhanden ist.

Hierzu wird vorgeschlagen, daß der Hauptsteuerkreis mit einer größeren Nennweite ausgestattet ist als der Vorsteuerkreis. Auf diese Weise entstehen im Hauptsteuerkreis geringere Strömungswiderstände als im Vorsteuerkreis. Da die Dosierkolbeneinheit bidirektional wirkt, wird der Hauptsteuerkreis sowohl in der Zuleitung als auch in der Ableitung mit den größeren Nennweiten ausgestattet sein, um einen schnellen Zufluß und Abfluß zu gestatten.

Zusätzlich läßt sich eine Lageregelung herbeiführen, um den sich während eines Arbeitstages ändernden fluidtechnischen Parametern wie Temperatur und Viskosität Rechnung zu tragen, so daß die erfindungsgemäß kurze Verzögerungszeit unter allen Betriebsparametern eingehalten werden kann.

Zusätzlich kann ein Leckageausgleichsventil vorgesehen sein, welches die Dosierseite der Dosierkolbeneinheit im Falle einer inneren Leckage nachfüllt, so daß das auszutragende Dosiervolumen stets konstant gehalten werden kann.

In Folge des Zeitgewinns, der sich durch die Erfindung ergibt, läßt sich zur Vermeidung von Hydraulikstößen im Leitungssystem die Dosierkolbeneinheit bei Annäherung an die Endlagen hydraulisch dämpfen, ohne daß hierdurch ein nennenswerter Zeitverlust in Kauf genommen werden müßte.

Dabei läßt es der Zeitgewinn auch zu, zur Vermeidung sprunghaft ansteigender Brems- und Kupplungsmomente, die innerhalb derjenigen Zeiten zu erwarten sind, in denen der Reibkontakt an Bremse bzw. Kupplung hergestellt wird, jeweils ein Druckverminderungsventil vorzusehen, so daß sich trotz verkürzter Verzögerungszeit sogar noch verringerte Belastungen des Antriebs ergeben.

Im folgenden wird die Erfindung in Form von Ausführungsbeispielen näher erläutert. Es zeigen:
- Fig.1: ein erstes Ausführungsbeispiel der Erfindung,
- Fig.2: das schematisch dargestellte Pressensicherheitsventil aus Fig.1 mit weiteren Details, und
- Fig.3: Bremszeit, Verzögerungszeit, Beschleunigungszeit im Diagramm.

Sofern im folgenden nichts anderes gesagt ist, gilt die folgende Beschreibung stets für alle Figuren.

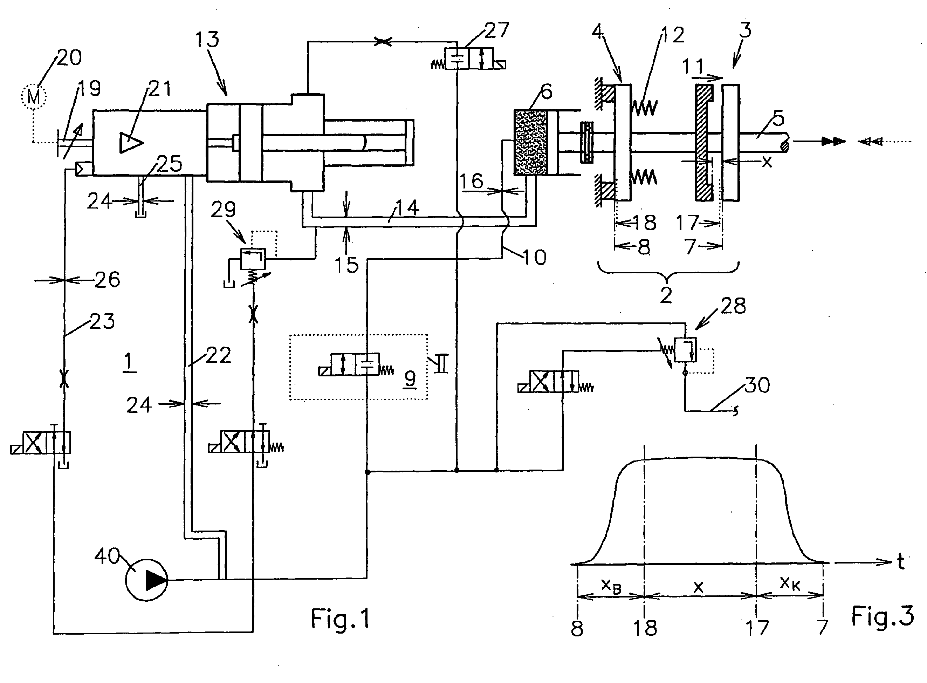

Die Figuren zeigen eine hydraulische Schaltung 1 zur Ansteuerung einer Kupplungs-Brems-Kombination 2. Die Kupplungs-Brems-Kombination 2 weist eine Kupplung 3 und eine Bremse 4 auf. Sie ist im Hauptantrieb 5 einer mechanischen Presse (nicht gezeigt) plazierbar. Die Kupplungs-Brems-Kombination 2 ist von einer Kolben-Zylindereinheit 6 zwischen einer Kupplungsstellung 7 und einer Bremsstellung 8 verlagerbar. Dies erfolgt über eine hydraulische Ansteuerung der Kolben-Zylindereinheit 6 über das Pressensicherheitsventil 9, welches in Fig.1 nur schematisch dargestellt ist.

Hierzu dient die Druckleitung 10, die das von der Pumpe 40 geförderte Hydraulikmedium über das Pressensicherheitsventil 9 erhält.

Wird die Kolben-Zylindereinheit 6 mit Hydraulikflüssigkeit beaufschlagt, bewegt sich die Kupplung 3 in Einrückrichtung 11. Hierzu muß sie den Weg X überbrücken, bis sie in die noch drehmomentfreie Endlage 17 gerät.

In dieser drehmomentfreien Endlage 17 findet gerade eben noch kein Reibkontakt zwischen den beiden Kupplungspartnern statt.

In der Gegenrichtung wird die Kolben-Zylindereinheit 6 ständig über die Druckfedern 12 beaufschlagt, sobald das Pressensicherheitsventil 9 entsprechend geschaltet wurde. Auch hier erreicht die Bremse zunächst eine drehmomentfreie Endlage 18, bevor sie über die Druckfedern 12 in einen Reibschlußkontakt mit dem ortsfesten Maschinengestell in ihre Bremsstellung 8 gerät.

Die Verlagerung der Kupplungs-Brems-Kombination zwischen den drehmomentfreien Endlagen 17 und 18 soll über die Dosierkolbeneinheit 13 erfolgen.

Hierzu ist die Dosierkolbeneinheit 13 über eine bidirektional durchströmbare Hydraulikverbindung 14 mit der Kolben-Zylindereinheit 6 verbunden.

Schematisch ist gezeigt, daß die Nennweite 15 der bidirektional durchströmbaren Hydraulikverbundung 14 größer als die Nennweite 16 der Abgangsleitung 10 des Pressensicherheitsventils 9 zur Kolben-Zylindereinheit 6 ist.

Auf diese weise lassen sich bei gleichem Druck von der Dosierkolbeneinheit größere Volumenströme innerhalb desselben Zeitfensters zur Kolben-Zylindereinheit 6 und umgekehrt transportieren, während dies für die Verlagerung der Kupplungs-Brems-Kombination zwischen den drehmomentfreien Endlagen 17 bzw. 18 und den zugehörigen Endstellungen 7 bzw. 8 nicht nötig ist, so daß die Nennweite 16 der Druckleitung 10, die über das Pressensicherheitsventil 9 beaufschlagt wird, entsprechend geringer sein kann.

Zweckmäßigerweise ist die bidirektional durchströmbare Hydraulikverbindung frei von jeglichen Einbauten, die den Strömungsquerschnitt verengen oder die Durchströmung verhindern. Hierzu wird vorgeschlagen, möglichst eine geradlinige Leitungsverbindung zu verwenden, die den Dosierraum der Dosierkolbeneinheit 13 mit dem Hydraulikraum der Kolben-Zylindereinheit 6 verbindet.

Zusätzlich ist hier das dosierte Ölvolumen so bemessen, daß bei Erreichen der jeweils drehmomentfreien Endlagen 17,18 der Kupplungs-Brems-Kombination gerade eben noch kein Reibkontakt zum Drehmomentaufbau an Kupplung 3 bzw. Bremse 4 erfolgt.

Hierzu veranschaulicht Fig.3 schematisch eine Zeitdarstellung, innerhalb der die Verzögerungszeit zwischen den drehmomentfreien Endlagen 17 und 18 bestimmt ist. Man erkennt, daß die drehmomentfreien Endlagen 17 bzw. 18 praktisch noch keinen Reibschluß zwischen den Reibpartnern von Kupplung 3 und Bremse 4 zulassen.

Innerhalb der dann folgenden Verlagerung von Kupplung 3 bzw. Bremse 4 in die Kupplungsstellung 7 bzw. Bremsstellung 8 wird der jeweilige Reibschluß aufgebaut und bis zum Formschluß (Haftreibung) vervollständigt.

Die Dosierkolbeneinheit 13 arbeitet rein volumengesteuert, so daß keine mechanischen Endanschläge für die jeweilige Hubbegrenzung notwendig sind.

Im vorliegenden Fall verfügt die Dosierkolbeneinheit 13 über eine Einstellvorrichtung 19, an welcher der begrenzte Hub von außen einstellbar ist.

Die Einstellung kann manuell oder, wie gestrichelt gezeigt, über einen Verstellmotor 20 erfolgen. Vorzugsweise handelt es sich um einen elektronisch ansteuerbaren Schrittmotor.

Weiterhin enthält die Dosierkolbeneinheit 13 einen Regler 21 der als Lageregler ausgeführt ist, um eventuelle Abweichungen des Dosiervolumens aufgrund sich ändernder fluidtechnischer Parameter im Sinne des vorgegebenen Soll-Dosiervolumens auszuregeln.

Zusätzlich ist die Dosierkolbeneinheit 13 mit einer Zuleitung des Hauptsteuerkreises 22 verbunden und parallel zum Hauptsteuerkreis 22 hydraulisch vorgesteuert 23. Dabei ist die Nennweite 24 des Hauptsteuerkreises 22 und hier auch der Ableitung 25 des Hauptsteuerkreises 22 größer als die Nennweite 26 des Vorsteuerkreises 23.

Zum Ausgleich innerer Leckagen dient das Leckageausgleichsventil 27, welches einerseits mit der Dosierkammer der Dosierkolbeneinheit 13 und andererseits mit der Pumpe 40 verbunden ist.

Die Dosierkolbeneinheit kann bei Annäherung an die Endlage hydraulisch dämpfbar sein. Hierzu bildet die Dosierkolbeneinheit mit dem als Regelventil ausgebildeten Regler 21 und dem durch die Position der Einstellvorrichtung 19 vorgegebenen Sollwert einen hydromechanischen Lageregelkreis. Das P-Regelsystem geht unter einer e-Funktion in die Endlage des von der Einstellvorrichtung vorgegebenen Hubs.

Zusätzlich können zur Verminderung sprunghaft ansteigender Brems- und Kupplungsmomente Druckverminderungsventile 28 für die Kupplung bzw. 29 für die Bremse vorgesehen sein. Hier handelt es sich um in Öffnungsrichtung mit dem jeweiligen Druck an der Kolben-Zylindereinheit 6 beaufschlagbare Überdruckventile, die bedarfsweise in Schließrichtung von dem Pumpendruck beaufschlagt sind.

Durch Verminderung der sprunghaft ansteigenden Brems- und Kupplungsmomente werden diese Ventile 28,29 in Öffnungsrichtung vom Druck der Kolben-Zylindereinheit 6 beaufschlagt und verringern somit plötzliche Druckanstiege der Kolben-Zylindereinheit 6 entsprechend.

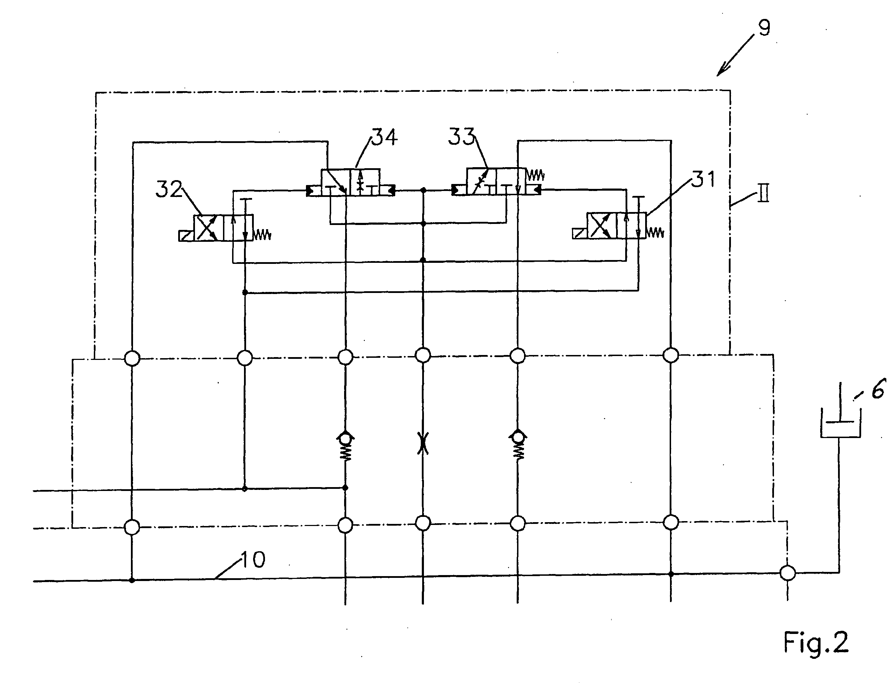

Zusätzlich zeigt Fig.2 ein Pressensicherheitsventil 9, welches aus zwei redundanten Wegeventilen 33,34 besteht, die hydraulisch vorgesteuert sind.

Die Vorsteuerventile 31,32 steuern den Leitungsdruck entsprechend ihrer jeweiligen Stellung auf die hydraulisch vorgesteuerten Brems- bzw. Kupplungsventile 33,34, so daß die in den drehmomentfreien Endlagen 17 bzw. 18 befindlichen Brems- bzw. Kupplungsbeläge in ihre Bremsstellung 8 bzw. Kupplungsstellung 7 verlagert werden können.

Dabei nehmen Kupplung 3 und Bremse 4 stets genau definierte Endstellungen 7 bzw. 8 ein. Die Verlagerung erfolgt daher von der Bremsstellung 8 in die Kupplungsstellung 7 und umgekehrt. Von den drehmomentfreien Endlagen 17 bzw. 18 in die Kupplung- 7 bzw. Bremsstellung 8 wird nur ein relativ kleiner Hub 17-7 bzw. 18-8 benötigt. Dieser Hub ist im Verhältnis zum Hub zwischen den drehmomentfreien Endlagen 17-18. bzw. 18-17 klein und kann durch die Verwendung der Dosiereinheit für beide Richtungen separat betrachtet werden. Somit ergibt sich die Möglichkeit, die Beschleunigungen bzw. Verzögerungen über die hydraulische Ansteuerung durch das Pressensicherheitsventil 19 nach den zulässigen Belastungen der Maschine auszuregeln und trotzdem zeitoptimal von 8 nach 17 bzw. 7 nach 18 zu gelangen. Diese Bewegungen sind Dank der bidirektional wirkenden Dosierkolbeneinheit 13 in beide Richtungen reproduzierbar und werden durch definierte Beschleunigungen bzw. Verzögerungen realisiert.

Es versteht sich, daß bei Verwendung eines Systems aus getrennter Kupplung und getrennter Bremse die obigen Ausführungen entsprechend anzuwenden sind, wobei auch zwei getrennte Dosiereinheiten mit derselben Funktion im Sinne der Erfindung Anwendung finden können.

Alternativ zu einer separaten bidirektional durchströmbaren Hydraulikverbindung 14 zur Kolben-Zylinder-Einheit 6 kann das Dosiervolumen auch zumindest teilweise über die Abgangsleitung 10 des Pressensicherheitsventils 9 zur Kolben-Zylinder-Einheit 6 gelangen.

### Bezugszeichenaufstellung:

- 1: hydraulische Schaltung
- 2: System aus Kupplung und Bremse
- 3: Kupplung
- 4: Bremse
- 5: Hauptantrieb
- 6: Kolben-Zylindereinheit
- 7: Kupplungsstellung
- 8: Bremsstellung
- 9: Pressensicherheitsventil
- 10: Druckleitung, Abgangsleitung von 9, Pumpenleitung
- 11: Einrückrichtung
- 12: Druckfeder
- 13: Dosierkolbeneinheit
- 14: bidirektional durchströmbare Hydraulikverbindung
- 15: Nennweite von 14
- 16: Nennweite von 10
- 17: drehmomentfreie Endlage von 7
- 18: drehmomentfreie Endlage von 8
- 19: Einstellvorrichtung
- 20: Verstellmotor
- 21: Regler
- 22: Hauptsteuerkreis, Zuleitung
- 23: Vorsteuerkreis
- 24: Nennweite von 22 bzw. 25
- 25: Hauptsteuerkreis, Ableitung
- 26: Nennweite von 23
- 27: Leckageausgleichsventil
- 28: Druckverminderungsventil für 3
- 29: Druckverminderungsventil für 4
- 30: Steuerleitung für Druckverminderungsventil von 3
- 31: Vorsteuerventil
- 32: Vorsteuerventil
- 33: hydraulisch vorgesteuertes Bremsventil
- 34: hydraulsich vorgesteuertes Kupplungsventil
- 40: Pumpe
- X: Verlagerungsweg innerhalb der Verzögerungszeit
- Xb: Verlagerungsweg innerhalb der Bremszeit
- Xk: Verlagerungsweg innerhalb der Beschleunigungszeit

## Patentansprüche

1. System (2) aus Kupplung (3) und Bremse (4), wobei die Kupplung (3) getrennt von der Bremse (4) im Hauptantrieb (5) einer mechanischen Presse plazierbar ist und das System (2) eine Kolbenzylindereinheit (6), ein Pressensicherheitsveintil (9), eine Druckleitung (10), eine Dosierkolbeneinheit (13) und eine bidirektional durchströmbare Hydraulikverbindung (14) umfasst und wobei Kupplung (3) und Bremse (4) durch die Kolben-Zylindereinheit (6) zwischen einer Kupplungsstellung (7) und einer Bremsstellung (8) verfahrbar sind und wobei die Kolben-Zylindereinheit (6) über das Pressensicherheitsventil (9) zum Drehmomentaufbau an der Kupplung (3) mit der Druckleitung (10) kommunizierend verbindbar und wobei die Bremse (4) gegen die Einrückrichtung (11) der Kupplung federbelastet (12) ist, wobei parallel zum Pressensicherheitsventil (9) die Dosierkolbeneinheit (13) über die bidirektional durchströmbare Hydraulikverbindung (14) mit der Kolben-Zylindereinheit (6) verbunden ist.

2. System (2) aus Kupplung (3) und Bremse (4) nach Anspruch 1, **dadurch gekennzeichnet, daß** die Nennweite (15) der bidirektional durchstömbaren Hydraulikverbindung (14) größer als die Nennweite (16) der Abgangsleitung (10) des Pressensicherheitsventils (9) zur Kolben-Zylindereinheit (6) ist.

3. System (2) aus Kupplung (3) und Bremse (4) nach Anspruch 1 oder 2, **dadurch gekennzeichnet, daß** die bidirektional durchströmbare Hydraulikverbindung (14) frei von den Strömungsquerschnitt verhengenden Einbauten ist.

4. System (2) aus Kupplung (3) und Bremse (4) nach einem der Ansprüche 1 bis 3, **dadurch gekennzeichnet, daß** das dosierte Ölvolumen so bemessen ist, daß bei Erreichen der Endlagen (17,18) der Kupplungs-Brems-Kombination (2) praktisch noch kein Drehmomentaufbau bei Kupplung (3) bzw. Bremse (4) erfolgt.

5. System (2) aus Kupplung (3) und Bremse (4) nach einem der Ansprüche 1 bis 4, **dadurch gekennzeichnet, daß** die Dosierkolbeneinheit (13) über einen begrenzten Hub ohne mechanische Endanschläge verfügt.

6. System (2) aus Kupplung (3) und Bremse (4) nach Anspruch 5, **dadurch gekennzeichnet, daß** der begrenzte Hub von außen einstellbar ist.

7. System (2) aus Kupplung (3) und Bremse (4) nach Anspruch 6, **dadurch gekennzeichnet, daß** der begrenzte Hub motorisch einstellbar ist.

8. System (2) aus Kupplung (3) und Bremse (4) nach einem der Ansprüche 1 bis 7, **dadurch gekennzeichnet, daß** die Dosierkolbeneinheit (13) einen Hauptsteuerkreis (22) und einen dazu parallel angeordneten Vorsteuerkreis (23) aufweist und daß der Hauptsteuerkreis (22) in Zuleitung und Ableitung (25) eine größere Nennweite (24) aufweist, als der Vorsteuerkreis (23).

9. System (2) aus Kupplung (3) und Bremse (4) nach einem der Ansprüche 1 bis 8, **dadurch gekennzeichnet, daß** die Steuerung der Dosierkolbeneinheit (13) einen hydromechanischen Lageregelkreis (21) zur Ausregelung sich ändernder Volumina bei sich ändernden fluidtechnischen Parametern eingebunden beinhaltet.

10. System (2) Kupplung (3) und Bremse (4) nach einem der Ansprüche 1 bis 9, **dadurch gekennzeichnet, daß** die Dosierkolbeneinheit (13) über ein Leckageausgleichsventil (27) mit der Druckleitung (10) verbindbar ist.

11. System (2) aus Kupplung (3) und Bremse (4) nach einem der Ansprüche 1 bis 10, **dadurch gekennzeichnet, daß** die Dosierkolbeneinheit (13) bei Annäherung an die Endlagen hydraulisch dämpfbar ist.

12. System (2) aus Kupplung (3) und Bremse (4) nach einem der Ansprüche 1 bis 11, **dadurch gekennzeichnet, daß** zur Verminderung sprunghaft ansteigender Brems- und Kupplungsmomente jeweils ein Druckverminderungsventil (28,29) vorgesehen ist.

## Claims

1. System (2) of a clutch (3) and brake (4), wherein the clutch (3) can be positioned separate from the brake (4) in the main drive (5) of a mechanical press and the system (2) contains a piston-cylinder unit (6), a press safety valve (9), a pressure line (10), a metering piston unit (13) and a hydraulic connection (14) through which fluid can flow in two directions, and wherein the clutch (3) and the brake (4) can be displaced by the piston-cylinder unit (6) between a coupling position (7) and a braking position (8), and wherein the piston-cylinder unit (6) can be connected in a communicating manner to the pressure line (10) via the press safety valve (9) for building up the torque on the clutch (3), and wherein the brake (4) is spring-loaded (12) against the engagement direction (11) of the clutch, wherein in parallel with the press safety valve (9) the metering piston unit (13) is connected to the piston-cylinder unit (6) via the hydraulic connection (14) through which fluid can flow in two directions.

2. System (2) of a clutch (3) and brake (4) as claimed in Claim 1, **characterised in that** the nominal width (15) of the hydraulic connection (14) through which fluid can flow in two directions is greater than the nominal width (16) of the drain line (10) of the press safety valve (9) to the piston-cylinder unit (6).

3. System (2) of a clutch (3) and brake (4) as claimed in Claim 1 or 2, **characterised in that** the hydraulic connection (14) through which fluid can flow in two directions is not provided with mounted inserts which narrow the flow cross-section.

4. System (2) of a clutch (3) and brake (4) as claimed in any one of Claims 1 to 3, **characterised in that** the metered oil volume is measured such that when the end positions (17, 18) of the clutch/brake combination (2) are reached there is practically no further build up of torque at the clutch (3) and/or brake (4).

5. System (2) of a clutch (3) and brake (4) as claimed in any one of Claims 1 to 4, **characterised in that** the metering piston unit (13) has a limited stroke without any mechanical end stops.

6. System (2) of a clutch (3) and brake (4) as claimed in Claim 5, **characterised in that** the limited stroke can be adjusted externally.

7. System (2) of a clutch (3) and brake (4) as claimed in Claim 6, **characterised in that** the limited stroke can be adjusted by means of a motor.

8. System (2) of a clutch (3) and brake (4) as claimed in any one of Claims 1 to 7, **characterised in that** the metering piston unit (13) comprises a main control circuit (22) and a pilot control circuit (23) disposed in parallel therewith, and **in that** the main control circuit (22) in the supply line and discharge line (25) has a greater nominal width (24) than the pilot control circuit (23).

9. System (2) of a clutch (3) and brake (4) as claimed in any one of Claims 1 to 8, **characterised in that** the controller of the metering piston unit (13) has integrated therein a hydro-mechanical position control circuit (21) for compensating for varying volumes in the case of varying fluidic parameters.

10. System (2) of a clutch (3) and brake (4) as claimed in any one of Claims 1 to 9, **characterised in that** the metering piston unit (13) can be connected to the pressure line (10) via a leakage compensation valve (27).

11. System (2) of a clutch (3) and brake (4) as claimed in any one of Claims 1 to 10, **characterised in that** the metering piston unit (13) can be hydraulically damped on approaching the end positions.

12. System (2) of a clutch (3) and brake (4) as claimed in any one of Claims 1 to 11, **characterised in that** a pressure-reducing valve (28, 29) is provided in each case for reducing suddenly increasing braking torque and coupling torque.

## Revendications

1. Système (2) composé d'un accouplement (3) et d'un frein (4), étant précisé que l'accouplement (3) est apte à être placé dans l'entraînement principal (5) d'une presse mécanique séparément par rapport au frein (4) et que le système (2) comprend une unité piston-cylindre (6), une soupape de sûreté de presse (9), une conduite de pression (10), une unité de piston doseur (13) et une liaison hydraulique (14) apte à être traversée par un écoulement bidirectionnel ; que l'accouplement (3) et le frein (4) sont mobiles entre une position d'accouplement (7) et une position de freinage (8) grâce à l'unité piston-cylindre (6) ; que l'unité piston-cylindre (6) est apte à être reliée à la conduite de pression (10) pour communiquer avec celle-ci par l'intermédiaire de la soupape de sûreté de presse (9) en vue de produire un couple au niveau de l'accouplement (3) ; que le frein (4) est contraint par ressort (12) à l'encontre du sens d'enclenchement (11) de l'accouplement ; et que parallèlement à la soupape de sûreté de presse (9), l'unité de piston doseur (13) est reliée à l'unité piston-cylindre (6) par l'intermédiaire de la liaison hydraulique (14) apte à être traversée par un écoulement bidirectionnel.

2. Système (2) composé d'un accouplement (3) et d'un frein (4) selon la revendication 1, **caractérisé en ce que** le diamètre nominal (15) de la liaison hydraulique (14) apte à être traversée par un écoulement bidirectionnel est supérieur au diamètre nominal (16) de la conduite de sortie (10) de la soupape de sûreté de presse (9) qui mène à l'unité piston-cylindre (6).

3. Système (2) composé d'un accouplement (3) et d'un frein (4) selon la revendication 1 ou 2, **caractérisé en ce que** la liaison hydraulique (14) apte à être traversée par un écoulement bidirectionnel ne comporte pas d'éléments intégrés rétrécissant la section transversale d'écoulement.

4. Système (2) composé d'un accouplement (3) et d'un frein (4) selon l'une des revendications 1 à 3, **caractérisé en ce que** le volume d'huile dosé est calculé pour que lorsque les positions de fin de course (17, 18) de la combinaison accouplement-frein (2) sont atteintes, il n'y ait pratiquement pas encore de production de couple pour l'accouplement (3) et le frein (4).

5. Système (2) composé d'un accouplement (3) et d'un frein (4) selon l'une des revendications 1 à 4, **caractérisé en ce que** l'unité de piston doseur (13) a une course limitée, sans butées mécaniques.

6. Système (2) composé d'un accouplement (3) et d'un frein (4) selon la revendication 5, **caractérisé en ce que** la course limitée est réglable de l'extérieur.

7. Système (2) composé d'un accouplement (3) et d'un frein (4) selon la revendication 6, **caractérisé en ce que** la course limitée est réglable à l'aide d'un moteur.

8. Système (2) composé d'un accouplement (3) et d'un frein (4) selon l'une des revendications 1 à 7, **caractérisé en ce que** l'unité de piston doseur (13) comprend un circuit de commande principal (22) et un circuit pilote (23) parallèle à celui-ci, et **en ce que** le circuit de commande principal (22) présente pour l'amenée et la sortie (25) un diamètre nominal (24) plus grand que le circuit pilote (23) .

9. Système (2) composé d'un accouplement (3) et d'un frein (4) selon l'une des revendications 1 à 8, **caractérisé en ce que** la commande de l'unité de piston doseur (13) contient un circuit hydromécanique de réglage de position (21) intégré pour compenser des variations de volume en présence de paramètres fluidiques qui changent.

10. Système (2) composé d'un accouplement (3) et d'un frein (4) selon l'une des revendications 1 à 9, **caractérisé en ce que** l'unité de piston doseur (13) est apte à être reliée à la conduite de pression (10) par l'intermédiaire d'une soupape de compensation de fuite (27).

11. Système (2) composé d'un accouplement (3) et d'un frein (4) selon l'une des revendications 1 à 10, **caractérisé en ce que** l'unité de piston doseur (13) est apte à être amortie hydrauliquement quand elle approche des positions de fin de course.

12. Système (2) composé d'un accouplement (3) et d'un frein (4) selon l'une des revendications 1 à 11, **caractérisé en ce que** pour réduire les couples de freinage et les couples d'accouplement qui augmentent brusquement, il est prévu des soupapes de réduction de pression respectives (28, 29).
